# EUROPEAN PATENT SPECIFICATION

(11) **EP 2 297 369 B1**
(45) Date of publication and mention of the grant of the patent: **01.08.2012**
(21) Application number: 09755072.7
(22) Date of filing: 27.05.2009
(51) Int. Cl.: C22B 21/00, C22B 7/04, B03B 9/04, B03C 1/247

(54) **METHOD FOR RECYCLING ALUMINIUM SLAGS COMPRISING AN EDDY CURRENT SEPARATOR OPERATING AT REDUCED ROTARY SPEED.**
VERFAHREN ZUR REZYKLIERUNG VON ALUMINIUMSCHLACKEN MIT EINEM MIT VERRINGERTER DREHZAHL BETRIEBENEN WIRBELSTROMSEPARATOR
PROCÉDÉ DE RECYCLAGE DE SCORIES D'ALUMINIUM UTILISANT UN SÉPARATEUR À COURANT DE FOUCAULT QUI FONCTIONNE À UNE VITESSE DE ROTATION RÉDUITE

(30) Priority: 30.05.2008 NL 2001640
(43) Date of publication of application: 23.03.2011
(73) Proprietor: Recco B.V., 1921 CX Akersloot (NL)
(72) Inventor: GROOTHOFF, Jan, Andreas, NL-2111 BT Aerdenhout (NL)
(74) Representative: Riemens, Roelof Harm
(86) International application number: PCT/NL2009/000123
(87) International publication number: WO 2009/145615

(56) References cited:
- WO-A-02/066164
- DE-A1- 19 634 802
- GB-A- 2 341 872
- JP-A- 5 146 701
- DATABASE WPI Week 200612 Thomson Scientific, London, GB; AN 2006-111477 XP002510604 & CN 1 673 084 A (PAN K) 28 September 2005 (2005-09-28)

## Description

The invention relates to a method for recycling aluminium slags, in particular for recovering aluminium from a waste stream of slags which results from the production of aluminium in an aluminium melter.

Currently, it is customary to send aluminium slags to specialized recycling companies where the slags are re-melted with the addition of salt in a rotary furnace. In this case, the aluminium is released in molten form and the slag is drawn off. With this method, the residual product is a so-called salt cake. This salt cake still contains a few percent of aluminium (approximately 6%). This aluminium can be separated off from the salt cake by crushing it and dissolving it in water. The residual product in that case is aluminium oxide which can be used in the cement industry.

However, the process of separating off the aluminium from the salt cake in this manner is complicated and environmentally unfriendly, due to the release of large amounts of ammonia. In Arab countries, for example, this process can be carried out in the desert where evaporation does not cause any problems and the emission of ammonia is carried out in uninhabitated regions. In Europe, there are hardly any such locations and the recovery process is carried out in very expensive covered installations where the ammonia can be collected. In some cases, the salt cakes are also stored in special secluded dumping locations which results in harmful consequences for the environment.

Furthermore, it is known to use eddy current separators in the recycling of aluminium slags. In this case, the eddy current separators are used in the customary manner to achieve maximum recovery of as many aluminium-containing parts as possible, irrespective of the purity percentage of the aluminium of these parts.

It is an object of the present invention to at least partly eliminate the above drawbacks and/or to provide a usable alternative. In particular, it is an object of the invention to provide a method for recycling aluminium slags which no longer requires the addition of salt and thus eliminates the associated production of the unattractive salt cake. In addition, it is an object of the invention to provide a method for recovering aluminium from salt cake deposits dumped in the past.

This object is achieved by a method according to claim 1. In this case, the aluminium slags are supplied to a first crushing device in which the slags are crushed to produce smaller fractions. These fractions are subsequently filtered by means of a first screening device to form at least a first and a second part-stream. Of the two, the first part-stream is coarser, while the second part-stream is consequently finer. At least the first part-stream is passed along an eddy current separator as a result of which aluminium-containing parts can be separated from the part-stream. According to the inventive idea, at least the first part-stream is passed along an eddy current separator which is driven at a rotary speed of less than 1000 rpm, in particular less than 500 rpm. Preferably, the eddy current separator in this case is of the type having a frequency-controlled rotary speed adjustment. The current prior-art eddy current separators operate at a standard of approx. 3500 rpm with approx. 20-30 magnet poles. By now reducing the speed of rotation significantly, it has been possible to use the eddy current separator as a quality-assessment tool, that is to say, as a selection machine which only removes aluminium parts which are sufficiently pure, that is to say those parts which consist of aluminium to at least 90%. The remaining parts which contain less than the required 90% aluminium are then returned to a crushing device in order to again pass through the steps of crushing, screening and eddy current separation at a reduced rotary speed. Advantageously, this crushing device, screening device and eddy current separator are the same as those to which the original main stream of aluminium slags was supplied. The parts which remain in each case after the treatment with the eddy current separator at reduced rotary speed are thus advantageously crushed as often as is necessary in the crushing device, thus removing any adhering aluminium oxide parts, and are then passed along the eddy current separator at reduced rotary speed until they can either be separated off as sufficiently pure aluminium parts or have become sufficiently small to end up in a subsequent process. Thus, by using eddy current separators as quality-assessment tool at an early stage of the process, an automatic control process which sends the waste parts to a crushing circuit as often as is necessary is established and those parts which are already sufficiently pure are not subjected to this treatment unnecessarily. This simplifies the recycling process and reduces the costs of wear and tear on the crushing devices which would otherwise be very high. Thus, it has been possible to separate off substantially pure aluminium-containing parts in an efficient manner, in particular with a purity of more than 90% aluminium content. Very advantageously, re-melting with the addition of salt in a rotary furnace is no longer necessary and thus salt cake is no longer produced as a residual product. Therefore, ammonia vapours no longer have to be collected during the after-treatment of the salt cake. Water no longer has to be added either, which results in cost savings, is environmentally friendly and crucial when re-melting the aluminium in a melting oven, as there would otherwise be a risk of explosion. Preferably, the aluminium slags are supplied in a (very) dry state and introduced into the recycling process.

In a particular embodiment, the part-stream from which the sufficiently pure aluminium-containing parts have been removed by means of the eddy current separator, before being further made smaller, is passed along a manual sorting station which is designed for manually picking out ferrosilicon. This is advantageous as ferrosilicon is a valuable material which may be present in amounts of several tens of percent in the stream of aluminium slags. Sorting is carried out based on colour. If desired, any pieces of aluminium which have been missed out and are still of acceptable quality can also be picked out manually.

In a further embodiment, prior to further treatment, a finest fraction, in particular a 0-1 mm residual stream is first removed from the second part-stream which was formed by filtration in the first screening device.

In a further embodiment, the second part-stream which has been formed by filtration in the first screening device, and from which, in particular, the finest fraction (0-1 mm) has been removed, is filtered again in a second screening device to form coarse and fine sub-part-streams, in particular part-streams with ranges of in each case a few millimetres. These sub-part-streams are subsequently passed along at least one and, in particular, several eddy current separators in cascade arrangement which are designed to recover the aluminium-containing parts therefrom. Each filtered sub-part-stream with a fixed size range is thus supplied to the one or several eddy current separators which can be accurately adjusted to these respective ranges. This makes it possible to produce a very accurate eddy current separator with which aluminium-containing parts can be filtered out accurately, in particular aluminium-containing parts comprising more than 90% aluminium, more particularly essentially pure aluminium.

Advantageously, at least one of the coarse sub-part-streams is passed along an eddy current separator which is driven at a rotary speed of less than 1000 rpm, in particular less than 500 rpm, so that it can again be used as a quality-assessment tool.

At least one of the fine (sub-)part-streams (in particular the 1-5 mm fraction) preferably passes along an eddy current separator, the internal magnet rotor of which rotates counter to the direction of transport of the supplied parts to be separated and rotates faster (in particular at at least 4000 or 5000 rpm) than usual, and with at least 40 magnet poles being used. This "heavy" eddy current separator (high rotary speed, opposite direction of rotation and high number of magnet poles) ensures in a reliable and efficient manner that a sufficiently large alternating magnetic field is produced in the fine parts to be separated (in particular the parts with a particle size of 1-5 mm), which is readily able to perform the intended separation on the basis of the eddy currents produced in the small parts.

In particular, use is made in this case of a cascade arrangement comprising at least two such "heavy" eddy current separators. In this case, each successive eddy current separator in turn picks aluminium out of the residual stream.

The finest sub-part-stream (in particular 0-1 mm) is preferably removed directly in order to be sold as aluminium oxide product, for example to the cement industry.

Dust which is released during the filtering step and/or crushing step, in particular filtering and/or crushing of the second finer part-stream, can be collected by means of an installation which is suitable for the purpose. This dust collection preferably takes place without the addition of water in order to prevent the risk of explosion during re-melting in a melting furnace.

Further embodiments are defined in the subclaims.

The invention also relates to a use according to claim 16.

An embodiment of the invention will be explained below with reference to the attached drawing, in which:

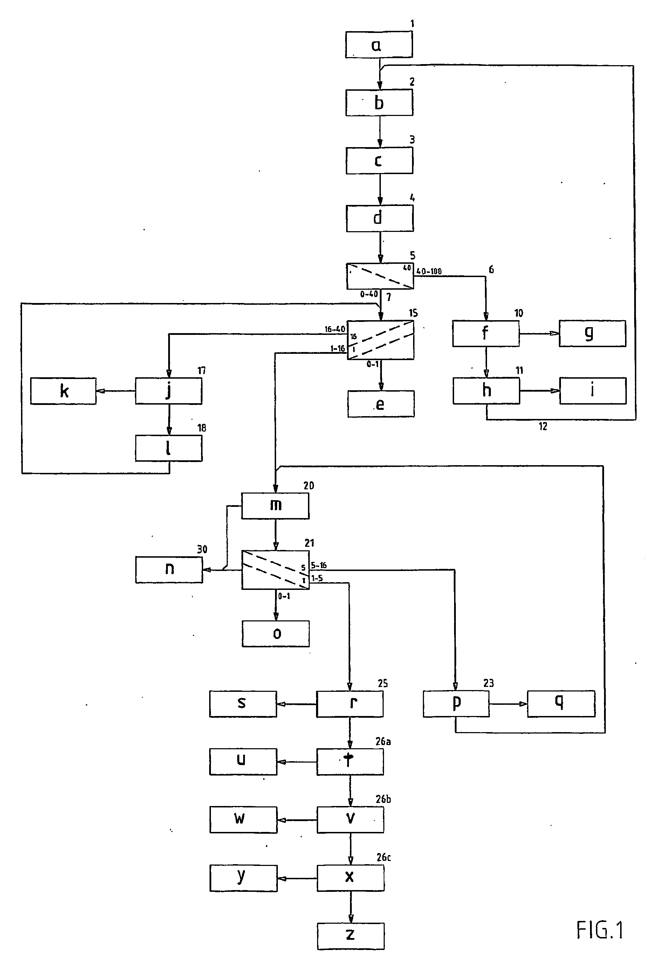

- Fig. 1 shows a flow chart of the various method steps according to the invention.

In Fig. 1, in step 1, dry aluminium slags, that is to say with a moisture content of less than 5%, are supplied, with the slag parts having a size of 0-500 mm. Large parts can first be cut into smaller, more suitable parts, for example by means of hydraulic shears. The aluminium slags are subsequently crushed to form smaller fractions in step 2, for example by means of a special crushing jaw, which is arranged inside the bucket of a hydraulic digging machine. This may be the same machine to which the hydraulic shears were first attached. The shear and crushing jaw attachments in the bucket are then replaced in turns. The hydraulic digging machine preferably is at least 20 tons and is provided with a so-called third hydraulic function. Crushing in this case takes place up to approximately 200 mm. In step 3, these parts are stored in a bunker from where the parts are supplied to a first crushing device 4, in particular a so-called impact crusher in which the dust fraction is extracted at the discharge. Subsequently, in step 5, separation into a first part-stream 6 and a second part-stream 7 takes place by means of filtering.

According to the invention, the first part-stream 6 containing parts in the range of 40-100 mm is supplied to an eddy current separator 10. The eddy current separator 10 comprises a rotating magnet rotor, i.e. a roller to which magnets are attached which are always fitted in a staggered manner. Around this slowly rotating rotor, a (glass fibre) roller is arranged along which a conveyor belt passes via which the slags of the first part-stream 6 are supplied. An induction current is generated in the aluminium-containing parts on the conveyor belt as soon as they pass over the magnet rotor. The circulating induction current generates a secondary magnetic field as a result of which the aluminium-containing part is repelled when it enters the magnetic field of the rotor. Thus, the parts containing sufficient aluminium are expelled from the first part-stream 6 and can be caught separately. Here, the eddy current separator 10 is a so-called "slow eddy current separator", that is to say that the magnet rotor thereof is driven at a reduced rotary speed of less than 1000 rpm, in particular less than 500 rpm, so that it can serve as a quality-assessment tool. Tests have shown that then only the very pure parts are lifted across a partition in order then to be discharged immediately as pure aluminium, that is to say that these parts contain at least 90 % aluminium. The number of magnet poles to be used on the magnet rotor of the eddy current separator 10 can be determined experimentally and may, for example, be selected to be 12 or 22.

The part of the first part-stream 6 which remains after the eddy current separator step is passed along a manual sorting station 11. Here, sufficiently pure ferrosilicon parts (purple in colour) are picked out and any of the pieces of aluminium which may have been missed but are still acceptable. If desired, it is also possible to filter out so-called sponge aluminium in this manual sorting station 11, as this is difficult to crush further and cannot therefore be readily purified further. The part 12 of the first part-stream 6 remaining after this step is returned to the crushing step 2.

The second part-stream 7 is separated out by filtering in a screening device 15 at 40 mm which also separates out a finest fraction of 0-1 mm which is discharged as oxide.

The 16-40 mm fraction is supplied to an eddy current separator 17 which again is of the "slow eddy current separator" type and thus serves as a quality-assessment tool for the very pure aluminium parts. The part of this coarse sub-part-stream which remains after this eddy current separator step is supplied to a second crushing device 18 in order to then be returned to the screening device 15. In this case, the crushing device 18 is preferably of the "sand impactor" type, i.e. a crusher which is designed specially for producing a fine fraction, in particular as fine as grains of sand.

The fine sub-part-stream of 1-16 mm fraction which has been separated out of the second part-stream 7 by filtration is supplied to a third crushing device 20 which is formed in this case by a so-called hammer mill with an adjustable, very narrow opening.

From the crushing device 20, the comminuted sub-fraction passes to a screening device 21 in order to be filtered to form several sub-part-streams. After filtering to 1 and 5 mm, the 5-16 mm fraction is moved to an eddy current separator 23 which is again of the "slow eddy current separator" type.

The number of magnet poles on the magnet rotor of both the eddy current separator 17 and the eddy current separator 23 has been selected in this case to be at least 40, in particular 44.

The part of the coarse 5-16 mm sub-part-stream remaining after the eddy current separator step is returned to the third crushing device 20. The finest 0-1 mm sub-part-stream is discharged as oxide. The fine 1-5 mm sub-part-stream is passed along a permanent neodymium magnet roller 25 in order to reliably remove any steel-containing parts, for example produced by wear of one of the crushers or screens, by pulling these out of the sub-part-stream. This is necessary in order to prevent possible burn out of a rotating magnet rotor of a very powerful eddy current separator which is located further downstream. In addition, all ferrous metal parts have to be removed in order to be able to perform an optimum non-ferrous separation of this small fraction.

Subsequently, the fine sub-part-stream passes to a three-step cascade eddy current separator 26a-c. The magnet rotors of the eddy current separators 26a-c rotate in the opposite direction to the glass fibre conveyor rollers or other conveying elements surrounding them at an increased rotary speed of at least 5000 revolutions/min and with a number of magnet poles of at least 40, in particular 44. During each passage, a percentage of the aluminium parts, in particular substantially pure aluminium parts, is separated out again. Usually, more than half of all the aluminium which is recovered will have been filtered out/recovered using this cascade of "heavy" eddy current separators 26a-c. Tests have shown that with this grain-size fraction, practically all the aluminium already has a so-called monocell structure and is pure as a result and the eddy current separator can in this case be used to produce a maximum yield of aluminium. The residual product then is only aluminium oxide, optionally mixed with ferrosilicon. This remainder is discharged as oxide, for example to the cement factories as an additive.

The screening device 21 is provided with dust-collecting means 30. Advantageously, these dust-collecting means 30 are also connected to the crushing device 20.

The above method and associated device components are preferably carried out and installed, respectively, in a covered space with sufficient room for storing the aluminium slags and the end products in dry conditions.

In addition to the illustrated embodiment, many variants are possible. For example it is possible to use any desired type of crushing device and/or screening device, and the intended dimensions to which comminution and filtering, respectively, are carried out, can be selected differently, if desired. For example, the limit of 40 mm is chosen as the bottom threshold for manual sorting. However, this may also be set to 50 or 60 mm. Filtering to 1-5 mm has been found to be more critical, as the special heavy eddy current separators have been found to work particularly efficiently at this fraction. Furthermore, it is possible to omit and/or add one or more of the filtering steps and/or crushing steps. The specific control of an eddy current separator with a reduced rotary speed of less than 1000 rpm, in particular less than 500 rpm, for the purpose of a quality assessment step, can advantageously also be used for other kinds of applications with other kinds of materials to be separated and/or recycled.

One or more of the eddy current separators used may have a magnet rotor which is provided with neodymium magnets. Depending on the intended rotary speed, the magnet rotor then rotates quickly or slowly in a drum, for example a glass-fibre drum. A supply belt passes over this drum for supplying the slag parts to be separated. The drum preferably forms one of the end drums of the supply belt. In addition, the supply belt runs over a drive roller. The drive roller of the supply belt is then at the start of the conveyor belt. This is possible due to the fact that the supply belt is relatively short. The eddy current separator then works according to the following principle: When a changing magnetic field generates an electric voltage in an electrically conductive material, this results in eddy currents. Each eddy current in this case generates its own magnetic field which is opposite to the original magnetic field. These results in electrically conductive materials, in this case nonferrous metals, being ejected from the magnetic field and flung away.

Thus, according to the invention, an environmentally friendly method for recycling aluminium slags is obtained by means of which a very high percentage of aluminium and aluminium-containing parts can be recovered, which can then be re-melted in a melting furnace for subsequent use. Advantageously, the new method and device according to the invention can also be used for reprocessing (old) salt cake deposits. In that case, the oxide-salt fraction will still have to undergo an after-treatment to separate the salt from the oxide and to remove the ammonia which is released upon solution in water in an environmentally friendly manner. It is also possible to use the invention for other kinds of aluminium-containing waste streams.

### LIST OF REFERENCE NUMERALS

a. Aluminium slag 0-500 mm
b. Crane with crushing jaw
c. Bunker 0-200 mm
d. Impact crusher
e. Aluminium oxide 0-1 mm
f. Slow eddy current separator
g. Aluminium 90% 40-100 mm
h. Manual sorting
i. Ferrosilicon 40-100 mm
j. Slow eddy current unit
k. Aluminium 90% 16-40 mm
l. Impact crusher
m. Impact crusher
n. Dust extraction
o. Aluminium oxide 0-mm
p. Slow eddy current separator
q. Aluminium 5-16 mm
r. Neodymium magnet
s. Iron 1-5 mm
t. Eddy current separator
u. Aluminium 1-5 mm
v. Eddy current separator
w. Aluminium 1-5 mm
x. Eddy current separator
y. Aluminium 1-5 mm
z. Aluminium oxide 1-5 mm

## Claims

1. Method for recycling aluminium slags, comprising the following steps:
- supplying aluminium slags;
- releasing aluminium-containing parts from the slags using a first crushing device in which the slags are crushed to form fractions;
- filtering the fractions using a first screening device to form at least a first coarse and second fine part-stream; and
- passing at least the first coarse part-stream along an eddy current separator for separating the aluminium-containing parts from the first coarse part-stream, **characterized in that**
at least the first coarse part-stream is passed along an eddy current separator which is driven at a rotary speed of less than 1000 rpm,
in which the parts which remain downstream of this eddy current separator at the rotary speed of less than 1000 rpm are returned to a crushing device in order to be crushed further to form fractions, the fractions which have been crushed further are supplied to a screening device in order to be filtered to form at least a first coarse and second fine part-stream, and in which at least the first coarse part-stream of fractions which have been crushed further and separated out by filtration is again passed along an eddy current separator which is driven at a rotary speed of less than 1000 rpm.

2. Method according to claim 1, in which at least the first coarse part-stream is passed along an eddy current separator which is driven at a rotary speed of less than 500 rpm.

3. Method according to claim 1 or 2, in which at least the first coarse part-stream is passed along an eddy current separator which is designed to separate parts which contain at least 90% aluminium.

4. Method according to one of the preceding claims, in which the first coarse part-stream, from which the aluminium-containing parts have been removed by means of an eddy current separator, before being returned to a crushing device, is supplied to a manual sorting station for separating out ferrosilicon.

5. Method according to one of the preceding claims, in which a finest fraction, in particular a 0-1 mm fraction, is removed from the second fine part-stream in a screening device prior to further treatment.

6. Method according to claim 5, in which the finest fraction removed from the second fine part-stream is discharged as oxide.

7. Method according to one of the preceding claims, in which the method furthermore comprises the following steps:
- filtering the second fine part-stream using at least one second screening device to form several sub-part-streams;
- recovering the aluminium-containing parts from at least one of the sub-part-streams by means of at least one second eddy current separator.

8. Method according to claim 7, in which at least the coarse sub-part-stream is passed along an eddy current separator which is driven at a rotary speed of less than 1000 rpm, in particular less than 500 rpm.

9. Method according to claim 7 or 8, in which the parts which remain downstream of the eddy current separator are returned to a crushing device in order for the slags to be crushed further to form fractions before being passed back to the second screening device.

10. Method according to one of claims 7-9, further comprising the step of supplying the second fine part-stream and/or one of the sub-part-streams separated out of the latter by filtration to a second crushing device, in which the slags are crushed further to form subfractions.

11. Method according to one of the preceding claims, in which at least a part-stream or a sub-part-stream is separated out by filtration with fractions or subfractions in the range from 1 to 5 mm.

12. Method according to claim 11, in which the (sub)fraction filtered to 1-5 mm is passed along an eddy current separator which is driven at a rotary speed of more than 4000 rpm, in particular more than 5000 rpm, in order to separate the aluminium-containing parts therefrom.

13. Method according to claim 12, in which a magnet rotor of the eddy current separator is driven at a rotary speed of more than 4000 rpm in a direction of rotation which is opposite to that of a driven conveying element which surrounds it.

14. Method according to claim 12 or 13, in which a magnet rotor of the eddy current separator which is driven at a rotary speed of more than 4000 rpm comprises at least 40 magnet poles which are fitted in a staggered manner.

15. Method according to one of claims 12-14, in which the (sub)fraction which has been filtered to 1-5 mm is passed along a cascade of at least two eddy current separators, each of which is driven at a rotary speed of more than 4000 rpm, in particular more than 5000 rpm, in order to successively separate out the aluminium-containing parts.

16. Use of the method according to one of the preceding claims for recovering aluminium from a waste stream of slags which results from the production of aluminium in an aluminium factory.

## Patentansprüche

1. Verfahren zum Recycling von Aluminiumschlacken, umfassend die folgenden Schritte:
- Zuführen von Aluminiumschlacken;
- Freisetzen von Aluminium enthaltenden Teilen von den Schlacken unter Verwendung einer ersten Zerkleinerungsvorrichtung, in welcher die Schlacken zerkleinert werden, um Bruchstücke auszubilden;
- Filtern der Bruchstücke unter Verwendung einer ersten Siebvorrichtung, um zumindest einen ersten Grob- und zweiten Feinteilstrom auszubilden; und
- Leiten von zumindest dem ersten Grobteilstrom entlang einer Wirbelstromtrennvorrichtung zum Trennen der Aluminium enthaltenden Teile von dem ersten Grobteilstrom,
**dadurch gekennzeichnet, dass**
zumindest der erste Grobteilstrom entlang einer Wirbelstromtrennvorrichtung geleitet wird, welche mit einer Drehgeschwindigkeit von weniger als 1000 U/min angetrieben wird,
wobei die Teile, welche nachgelagert von dieser Wirbelstromtrennvorrichtung mit der Drehgeschwindigkeit von weniger als 1000 U/min zurückbleiben, zu einer Zerkleinerungsvorrichtung zurückgeführt werden, um weiter zerkleinert zu werden, um Bruchstücke auszubilden, wobei die Bruchstücke, welche weiter zerkleinert wurden, zu einer Siebvorrichtung zugeführt werden, um gefiltert zu werden, um zumindest einen ersten Grob- und zweiten Feinteilstrom auszubilden, und wobei zumindest der erste Grobteilstrom der Bruchstücke, welche weiter zerkleinert wurden und durch Filtration herausgetrennt wurden, wieder entlang einer Wirbelstromtrennvorrichtung geleitet wird, welche mit einer Drehgeschwindigkeit von weniger als 1000 U/min angetrieben wird.

2. Verfahren nach Anspruch 1, wobei zumindest der erste Grobteilstrom entlang einer Wirbelstromtrennvorrichtung geleitet wird, welche mit einer Drehgeschwindigkeit von weniger als 500 U/min angetrieben wird.

3. Verfahren nach Anspruch 1 oder 2, wobei zumindest der erste Grobteilstrom entlang einer Wirbelstromtrennvorrichtung geleitet wird, welche ausgestaltet ist, Teile zu trennen, welche zumindest 90% Aluminium enthalten.

4. Verfahren nach einem der vorhergehenden Ansprüche, wobei der erste Grobteilstrom, aus welchem die Aluminium enthaltenden Teile mittels einer Wirbelstromtrennvorrichtung entfernt wurden, zu einer manuellen Sortierstation zum Heraustrennen von Ferrosilizium geführt wird, bevor er zu einer Zerkleinerungsvorrichtung zurückgeführt wird.

5. Verfahren nach einem der vorhergehenden Ansprüche, wobei ein feinstes Bruchstück, insbesondere ein 0-1 mm-Bruchstück, von dem zweiten Feinteilstrom entfernt wird in einer Siebvorrichtung vorangehend einer weiteren Behandlung.

6. Verfahren nach Anspruch 5, wobei das feinste Bruchstück, welches von dem zweiten Feinteilstrom entfernt wird, als Oxid abgeführt wird.

7. Verfahren nach einem der vorhergehenden Ansprüche, wobei das Verfahren ferner die folgenden Schritte umfasst:
- Filtern des zweiten Feinteilstroms unter Verwendung von mindestens einer zweiten Siebvorrichtung, um mehrere Sub-Teilströme auszubilden;
- Zurückgewinnen der Aluminium enthaltenden Teile von mindestens einem der Sub-Teilströme mittels mindestens einer zweiten Wirbelstromtrennvorrichtung.

8. Verfahren nach Anspruch 7, wobei zumindest der Grob Sub-Teilstrom entlang einer Wirbelstromtrennvorrichtung geleitet wird, welche mit einer Drehgeschwindigkeit von weniger als 1000 U/min, insbesondere weniger als 500 U/min, angetrieben wird.

9. Verfahren nach Anspruch 7 oder 8, wobei die Teile, welche stromabwärts der Wirbelstromtrennvorrichtung zurückbleiben, zu einer Zerkleinerungsvorrichtung zurückgeführt werden, um die Schlacken weiter zu zerkleinern, um Bruchstücke auszubilden, bevor sie zurück zu der zweiten Siebvorrichtung geführt werden.

10. Verfahren nach einem der Ansprüche 7-9, ferner umfassend den Schritt eines Zuführens des zweiten Feinteilstroms und/oder einem der Sub-Teilströme, welche von dem letzteren durch Filtration getrennt wurden, zu einer zweiten Zerkleinerungsvorrichtung, in welcher die Schlacken weiter zerkleinert werden, um Sub-Bruchstücke auszubilden.

11. Verfahren nach einem der vorhergehenden Ansprüche, bei welchem mindestens ein Teilstrom oder ein Sub-Teilstrom mit Bruchstücken oder Sub-Bruchstücken in dem Bereich von 1-5 mm durch Filtration herausgetrennt wird.

12. Verfahren nach Anspruch 11, bei welchem das (Sub-) Bruchstück, welches auf 1-5 mm gefiltert wurde, entlang einer Wirbelstromtrennvorrichtung geleitet wird, welche mit einer Drehgeschwindigkeit von mehr als 4000 U/min, insbesondere mehr als 5000 U/min, angetrieben wird, um die Aluminium enthaltenden Teile davon zu trennen.

13. Verfahren nach Anspruch 12, bei welchem ein Magnetrotor der Wirbelstromtrennvorrichtung mit einer Drehgeschwindigkeit von mehr als 4000 U/min in einer Drehrichtung angetrieben wird, welche entgegengesetzt zu der eines angetriebenen Beförderungselements ist, welches ihn umgibt.

14. Verfahren nach Anspruch 12 oder 13, wobei ein Magnetrotor der Wirbelstromtrennvorrichtung, welche mit einer Drehgeschwindigkeit von mehr als 4000 U/min angetrieben wird, mindestens 40 Magnetpole umfasst, welche in einer versetzten Art und Weise angebracht sind.

15. Verfahren nach einem der Ansprüche 12-14, wobei das (Sub-) Bruchstück, welches auf 1-5 mm gefiltert wurde, entlang einer Kaskade von mindestens zwei Wirbelstromtrennvorrichtungen geleitet wird, wobei jede davon mit einer Drehgeschwindigkeit von mehr als 4000 U/min, insbesondere mehr als 5000 U/min, angetrieben wird, um die Aluminium enthaltenden Teile nacheinander herauszutrennen.

16. Verwendung des Verfahrens nach einem der vorhergehenden Ansprüche zum Rückgewinnen von Aluminium aus einem Abfallstrom von Schlacken, welche aus der Produktion von Aluminium in einer Aluminiumfabrik resultieren.

## Revendications

1. Procédé de recyclage de scories d'aluminium, comprenant les étapes suivantes consistant à :
- fournir des scories d'aluminium ;
- libérer les parties contenant de l'aluminium des scories au moyen d'un premier dispositif de concassage dans lequel les scories sont concassées pour former des fractions ;
- filtrer les fractions au moyen d'un premier dispositif de criblage pour former au moins un premier flux partiel grossier et un second flux partiel fin ; et
- faire passer au moins le premier flux partiel grossier le long d'un séparateur à courants de Foucault pour séparer les parties contenant de l'aluminium du premier flux partiel grossier,
**caractérisé en ce que**
on fait passer au moins le premier flux partiel grossier le long d'un séparateur à courants de Foucault qui est entraîné à une vitesse de rotation inférieure à 1000 trs/min,
dans lequel les parties qui restent en aval de ce séparateur à courants de Foucault à la vitesse de rotation inférieure à 1000 trs/min sont renvoyées vers un dispositif de concassage afin d'être encore concassés pour former des fractions, les fractions qui ont été encore concassées sont fournies à un dispositif de criblage afin d'être filtrées pour former au moins un premier flux partiel grossier et un second flux partiel fin, et dans lequel on fait passer à nouveau au moins le premier flux partiel grossier de fractions qui ont été encore concassées et séparées par filtrage le long d'un séparateur à courants de Foucault qui est entraîné à une vitesse de rotation inférieure à 1000 trs/min.

2. Procédé selon la revendication 1, dans lequel on fait passer au moins le premier flux partiel grossier le long d'un séparateur à courants de Foucault qui est entraîné à une vitesse de rotation inférieure à 500 trs/min.

3. Procédé selon la revendication 1 ou 2, dans lequel on fait passer au moins le premier flux partiel grossier le long d'un séparateur à courants de Foucault qui est conçu pour séparer les parties qui contiennent au moins 90 % d'aluminium.

4. Procédé selon l'une des revendications précédentes, dans lequel le premier flux partiel grossier, dont les parties contenant de l'aluminium ont été retirées au moyen d'un séparateur à courants de Foucault, avant d'être renvoyées vers un dispositif de criblage, est fourni à un poste de tri manuel pour séparer le ferrosilicium.

5. Procédé selon l'une des revendications précédentes, dans lequel une fraction la plus fine, en particulier une fraction de 0-1 mm, est retirée du second flux partiel fin dans un dispositif de criblage avant traitement ultérieur.

6. Procédé selon la revendication 5, dans lequel la fraction la plus fine retirée du second flux partiel fin est déchargée sous forme d'oxyde.

7. Procédé selon l'une des revendications précédentes, comprenant en outre les étapes consistant à :
- filtrer le second flux partiel fin au moyen d'au moins un second dispositif de criblage pour former plusieurs sous-flux partiels ;
- récupérer les parties contenant de l'aluminium d'au moins l'un des sous-flux partiels au moyen de l'au moins un second séparateur à courants de Foucault.

8. Procédé selon la revendication 7, dans lequel on fait passer au moins le sous-flux partiel grossier le long d'un séparateur à courants de Foucault qui est entraîné à une vitesse de rotation inférieure à 1000 trs/min, en particulier inférieure à 500 trs/min.

9. Procédé selon la revendication 7 ou 8, dans lequel les parties qui restent en aval du séparateur à courants de Foucault sont renvoyées vers un dispositif de concassage afin que les scories soient encore concassées pour former des fractions avant de passer à nouveau dans le second dispositif de criblage.

10. Procédé selon l'une des revendications 7 à 9, comprenant en outre l'étape consistant à fournir le second flux partiel fin et/ou l'un des sous-flux partiels séparés de ce dernier par filtrage à un second dispositif de concassage, dans lequel les scories sont encore concassées pour former des sous-fractions.

11. Procédé selon l'une des revendications, dans lequel au moins un flux partiel ou un sous-flux partiel est séparé par filtrage avec des fractions ou sous-fractions dans la plage de 1 à 5 mm.

12. Procédé selon la revendication 11, dans lequel on fait passer la (sous)fraction filtrée à 1-5 mm le long d'un séparateur à courants de Foucault qui est entraîné à une vitesse de rotation supérieure à 4000 trs/min, en particulier supérieure à 5000 trs/min, afin d'en séparer les parties contenant de l'aluminium.

13. Procédé selon la revendication 12, dans lequel un rotor à aimant du séparateur à courants de Foucault est entraîné à une vitesse de rotation supérieure à 4000 trs/min dans une direction de rotation qui est opposée à celle d'un élément de convoyage entraîné qui l'entoure.

14. Procédé selon la revendication 12 ou 13, dans lequel un rotor à aimant du séparateur à courants de Foucault qui est entraîné à une vitesse de rotation supérieure à 4000 trs/min comprend au moins 40 pôles d'aimant qui sont disposés en quinconce.

15. Procédé selon l'une des revendications 12 à 14, dans lequel on fait passer la (sous)fraction qui a été filtrée à 1-5 mm le long d'une cascade d'au moins deux séparateurs à courants de Foucault, chacun étant entraîné à une vitesse de rotation supérieure à 4000 trs/min, en particulier supérieure à 5000 trs/min, afin de séparer successivement les parties contenant de l'aluminium.

16. Utilisation du procédé selon l'une des revendications précédentes pour récupérer l'aluminium d'un flux de déchets de scories qui résulte de la production d'aluminium dans une usine d'aluminium.
